# DEMANDE DE BREVET EUROPEEN

(11) **EP 1 605 702 A1**
(43) Date de publication de la demande: **14.12.2005**
(21) Numéro de dépôt: 05291239.1
(22) Date de dépôt: 09.06.2005
(51) Int. Cl.: H04N 7/24

(54) **Procédé de commutation de programmes vidéo numériques et émetteur pour sa mise en oeuvre**

(30) Priorité: 10.06.2004 FR 0406251
(71) Demandeur: Mediasyscom SAS, 73374 Le Bourget-du-Lac Cedex (FR)
(72) Inventeur: Basse, Emmanuel, 74000 Annecy (FR); Thareau, Nicolas, 74940 Annecy-le-Vieux (FR)
(74) Mandataire: Dupuis-Latour, Dominique

(57) **Abrégé**

Procédé de commutation de programmes vidéo numériques, chaque programme étant diffusé par un émetteur sous forme d'une succession de groupes (GOP) d'images codées comprenant, chacun, une image de référence de type I suivie d'une pluralité d'images secondaires de type X (P ou B). Selon l'invention, suite à une requête adressée à l'émetteur par un récepteur desdits programmes lors d'une commutation de programme, ledit procédé comporte une étape consistant pour l'émetteur à substituer au programme d'origine diffusé un flux de synchronisation associé au programme demandé, constitué par un train d'images de référence de type I encodées à partir d'images de référence de type I et P du programme d'origine et séparées par un intervalle de temps n.□t avec n = 1,2,...

Application à la diffusion de programmes de télévision numérique sur le réseau Internet en mode de multidiffusion.

## Description

La présente invention concerne un procédé de commutation de programmes vidéo numériques. Elle concerne également un émetteur pour la mise en oeuvre de ce procédé.

L'invention trouve une application particulièrement avantageuse dans le domaine de la diffusion de programmes de télévision numérique, notamment sur le réseau Internet en mode de multidiffusion.

La télévision classique est émise sous la forme d'un signal analogique codant chaque ligne de l'image, les lignes étant séparées entre elles par un signal de synchronisation-ligne et, à la fin de chaque trame, par un signal de synchronisation-trame.

Chaque image est entrelacée, c'est-à-dire qu'une image complète (525 lignes en NTSC et 625 lignes en PAL) est composée de deux trames, l'une codant les lignes paires, l'autre les lignes impaires. Le signal de couleur est intégré au signal de luminance dans une sous-porteuse, chaque ligne incorporant alternativement une des deux composantes couleur, la troisième étant déterminée, pour chaque ligne, par une opération de calcul entre la luminance et les deux composantes de couleur codées.

La télévision numérique est émise sous la forme d'un signal numérique, c'est-à-dire un train binaire modulé, soit en QPSK *(Quadrature Phase Shift Keying*) pour la télévision par satellite et hertzienne numérique, soit en QAM *(Quadrature Amplitude Modulation)* sur les réseaux de télévision câblée. A la réception, le train binaire démodulé et corrigé par un décodeur Reed-Solomon est un flux dont les caractéristiques sont conformes à diverses normes concernant les modalités de télévision numérique (standard européen DVB, *Digital Video Broadcasting*) ou le codage de compression-source (standard de compression d'images animées MPEG, *Motion Picture Expert Group).*

Le train binaire transporte et multiplexe des données vidéo, audio et système, sous forme de paquets de données de taille fixe. Chaque paquet porte en tant que données utiles une fraction de différents flux PES (Pac*ketized Etementary Stream*) audio et vidéo, ainsi que des paquets d'informations-système. Les flux PES sont eux-mêmes composés de paquets de taille variable, comportant en en-tête des données de synchronisation et en données utiles des fractions de flux élémentaires MPEG. Les flux élémentaires sont conformes aux normes MPEG-1, MPEG-2 ou MPEG-4.

Un flux élémentaire vidéo code pour un flux vidéo, c'est-à-dire un signal NTSC ou PAL à 30 ou 25 images par seconde. Ce signal d'origine est compressé conformément à la norme MPEG sous la forme d'images consécutives dans le flux binaire. Selon cette norme, chaque image est encodée suivant trois types de codage.

Le premier type de codage est le codage I (Intra) qui assure une compression et un codage complets de l'image. L'image numérisée est découpée en macroblocs de taille fixe (par exemple 8x8 pixels), et chacun des macroblocs est encodé par transformée en cosinus discrète (DCT, *Discrete Cosine Transform).* L'image encodée I est alors décodée sur le récepteur par restitution de ses macroblocs.

Le deuxième type de codage est le codage P (Prédictif) qui découpe de même l'image en macroblocs, mais qui augmente l'efficacité de compression en comparant l'image codée à l'image précédente, et en remplaçant le plus grand nombre possible de macroblocs par des références à des macroblocs similaires de l'image I de référence, associés à un vecteur de mouvement. L'image P est donc décodée à l'aide des informations qui la codent, mais aussi des données de l'image I ou P qui la précède.

Le troisième type de codage est le codage B (Bidirectionnel) qui augmente encore l'efficacité de compression en comparant l'image à coder aux images immédiatement précédente et suivante.

Ainsi, une séquence vidéo est constituée d'une succession de groupes d'images, appelés GOP *(Group Of Pictures).* Chaque GOP est en lui-même une mini-séquence vidéo qui peut être décodée sans nécessiter d'informations externes au GOP lui-même. Ces images sont codées selon les différentes techniques qui ont été exposées plus haut. En résumé, les images de type I contiennent en elles-mêmes toutes les informations nécessaires au décodage, tandis que le décodage des images secondaires de type X (P et B) est fonction d'informations externes. Certaines de ces images peuvent dépendre d'une ou plusieurs autres images.

Chaque GOP commence par une image de type I, c'est pourquoi ces images sont appelées images de référence. En cas de démarrage d'un décodage suite à une commutation de programmes (« zapping ») ou d'une perte de signal, le codage ne peut commencer que par une image I de référence qui seule peut être décodée à l'aide de ses propres données.

Par convention utilisateur ou selon certaines recommandations intemationales, les GOP peuvent être de taille fixe et constante tout au long d'une séquence. C'est le cas en télévision numérique lorsque des GOP de taille 15 ou de taille 12 sont imposés en mode NTSC ou en mode PAL. De fait, lors d'une commutation de programmes, le récepteur commence à décoder au plus dans la demi-seconde suivante, ce qui est jugé acceptable par les téléspectateurs.

Par contre, les différents standards ou normes de codage vidéo n'imposent pas la fixité des GOP, mais jouent au contraire, comme la norme MPEG-4, sur la variabilité de la taille des GOP pour optimiser le rapport qualité/taux de compression. Il n'est donc pas rare de rencontrer des GOP de 300 images, ce qui correspond à une durée de 12 secondes en PAL. Ainsi, lors d'une commutation de programmes (« zapping ») telle qu'elle est réalisée aujourd'hui, sans technique particulière, les délais d'attente peuvent être très longs pour effectuer le passage du programme courant au nouveau programme demandé.

Aussi, le problème technique à résoudre par l'objet de la présente invention est de proposer un procédé de commutation de programmes vidéo numériques, chaque programme étant diffusé par un émetteur sous forme d'une succession de groupes d'images codées comprenant, chacun, une image de référence de type I suivie d'une pluralité d'images secondaires de type X (P ou B), qui permettrait d'obtenir une commutation de programmes rapide, conforme aux attentes des téléspectateurs, tout en préservant les avantages inhérents aux GOP variables concernant le rapport qualité/taux de compression.

La solution au problème technique posé consiste, selon la présente invention, en ce que, suite à une requête adressée à l'émetteur par un récepteur desdits programmes lors d'une commutation de programme, ledit procédé comporte une étape consistant pour l'émetteur à substituer au programme d'origine diffusé un flux de synchronisation associé au programme demandé, constitué par un train d'images de référence de type I encodées à partir d'images de référence de type I et P du programme d'origine et séparées par un intervalle de temps n.Δt, avec n = 1,2,...

Ainsi, on comprend que, si l'on choisit par exemple un intervalle de temps élémentaire Δt de 0,5 seconde, le temps de commutation sera au plus de 0,5 seconde, à comparer à la dizaine de secondes qui serait nécessaire sans la mise en oeuvre du procédé conforme à l'invention. En effet, l'invention revient à substituer au GOP nominal un train spécifique de synchronisation dans lequel les images de référence sont reproduites toutes les Δt secondes. D'où l'anticipation au décodage recherchée.

On notera que l'invention présente l'avantage de ne pas exiger de récepteurs particuliers, les récepteurs habituels étant aptes, par construction, à détecter les images de référence reproduites dans le train du flux de synchronisation aussi bien que les images de référence dans les GOP nominaux.

Dans un mode de réalisation particulier, l'invention prévoit que, lesdits programmes étant diffusés sur le réseau Intemet, l'émetteur fournit en permanence au récepteur une adresse IP pour chaque flux de synchronisation associé à chaque programme.

La transmission sur réseau informatique selon le protocole réseau IP (*Internet Protocol)* peut être établie selon le protocole de transport dit connecté TCP (*Transmission Control Protocol*) ou le protocole dit non-connecté UDP (*User Datagram Protocol*). Le premier de ces protocoles établit une connexion entre deux entités, le second n'établit aucune connexion. Selon le protocole UDP, non-connecté, la transmission peut être du type unidiffusion (« Unicast »), d'un émetteur vers un récepteur, ou multidiffusion (« Multicast ») d'un émetteur vers plusieurs récepteurs. Ce dernier type de communication, UDP Multicast, est le plus efficace pour diffuser un signal de télévision numérique sur un réseau IP. Dans ce mode de communication, un émetteur diffuse chaque programme à destination d'une adresse, dite « multicast », n'appartenant à aucun récepteur en propre, mais définissant un flux de données déterminé sur le réseau. Les récepteurs désirant recevoir un flux « multicast » peuvent s'abonner à ce flux, et, par la suite, s'y désabonner. Le protocole de signalisation permettant à un récepteur de signifier sa volonté de recevoir ou de ne plus recevoir un flux « multicast » est l'IGMP (*Internet Gateway Multicast Protocol*).

Dans ce contexte, l'invention recommande que la communication avec ladite adresse IP soit établie selon un protocole de transport UDP, et que, de préférence, ledit protocole de transport soit le protocole UDP multidiffusion.

D'autre part, comme on le verra en détail plus loin, l'invention a également pour objet un émetteur de programmes vidéo numériques où, chaque programme étant diffusé sous forme d'une succession de groupes d'images codées comprenant, chacun, une image de référence suivie d'une pluralité d'images secondaires, il est prévu des moyens aptes, sur réception d'une requête de commutation de programme adressée à l'émetteur par un récepteur desdits programmes, à substituer au programme d'origine diffusé un flux de synchronisation associé au programme demandé à la suite d'une commutation de programmes, ledit flux de synchronisation étant constitué par un train d'images comprenant une image de référence suivie d'une pluralité de n images encodées selon l'image de référence et séparées de l'image de référence par un intervalle de temps n.Δt avec n=1,2,...

On va maintenant décrire un exemple de mise en oeuvre du dispositif de l'invention, en référence aux dessins annexés, donnés à titre d'exemple non limitatif.

La figure 1 est un diagramme montrant les échanges d'informations entre un émetteur et un récepteur lors d'une commutation de programmes selon l'art antérieur.

La figure 2 est un diagramme montrant les échanges d'informations entre un émetteur et un récepteur lors d'une commutation de programmes selon l'invention.

La figure 3 est un schéma de la structure d'un train de flux de synchronisation selon l'invention.

La figure 4 est un schéma d'un émetteur permettant la mise en oeuvre du procédé conforme à l'invention.

La description qui va suivre en regard des dessins annexés, fera bien comprendre en quoi consiste l'invention et comment elle peut être réalisée. Dans la suite, on prendra l'exemple de programmes de télévision numérique diffusés au standard MPEG-4 sur IP. Bien entendu, ce choix n'est en aucun limitatif, l'invention pouvant s'appliquer à bien d'autres types équivalents de diffusion numérique.

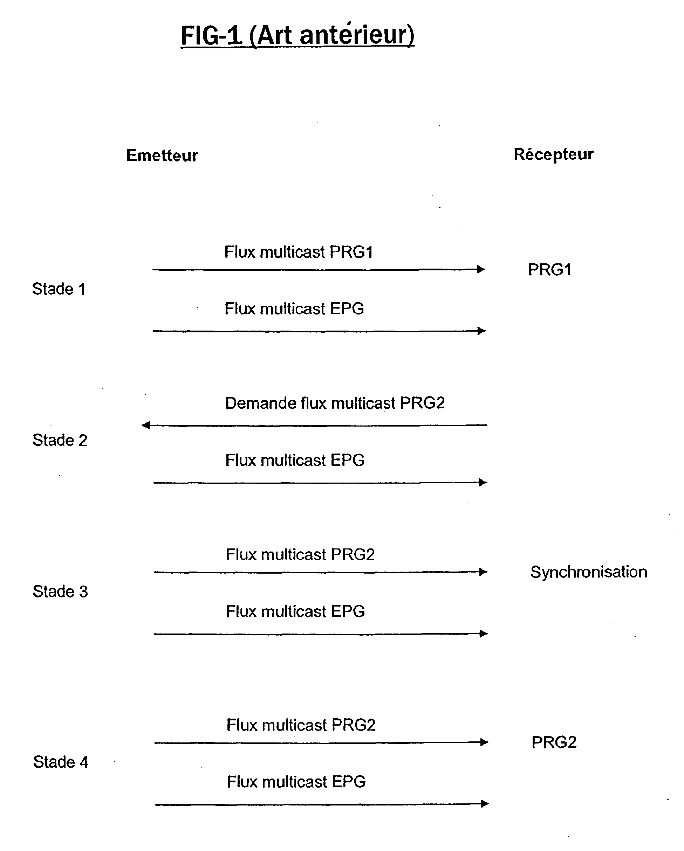

La figure 1 montre la façon dont la commutation de tels programmes numériques s'effectue selon l'art antérieur.

Le flux multicast EPG *(Electronic Program Guide)* contient les informations sur les adresses multicast des divers programmes de télévision. Ce flux est reçu en permanence par le récepteur. Il est transporté dans des paquets d'informations-système du réseau (par exemple selon le standard DVB-SI). II contient les informations relatives au bouquet global de canaux disponibles, le nom des canaux, les émissions en cours, la date et l'heure du début et de la fin des émissions, le descriptif et le résumé des émissions, les sous-titres.

Le *stade 1* correspond au stade initial où le récepteur reçoit le flux multicast contenant le programme de télévision courant PRG1.

Au *stade* 2, au moyen de la télécommande du téléviseur, une commutation de programmes est effectuée demandant la réception du flux multicast d'un nouveau programme de télévision PRG2.

Le *stade* 3 est une phase de synchronisation. La commutation de programmes étant réalisée, le récepteur cesse de recevoir le programme courant PRG1 et reçoit le flux multicast du nouveau programme PRG2.

Pour se synchroniser sur le nouveau flux, le récepteur doit attendre le début d'un groupe d'images (GOP) MPEG, c'est-à-dire une image de référence I pour commencer le décodage, il élimine toutes les images précédentes. A la réception d'une image I, la synchronisation est réalisée et le décodage commence.

Au *stade 4,* le nouveau programme PRG2 devient le programme courant. Le récepteur se trouve alors dans l'état initial du stade 1, mais sur un autre programme de télévision PRG2.

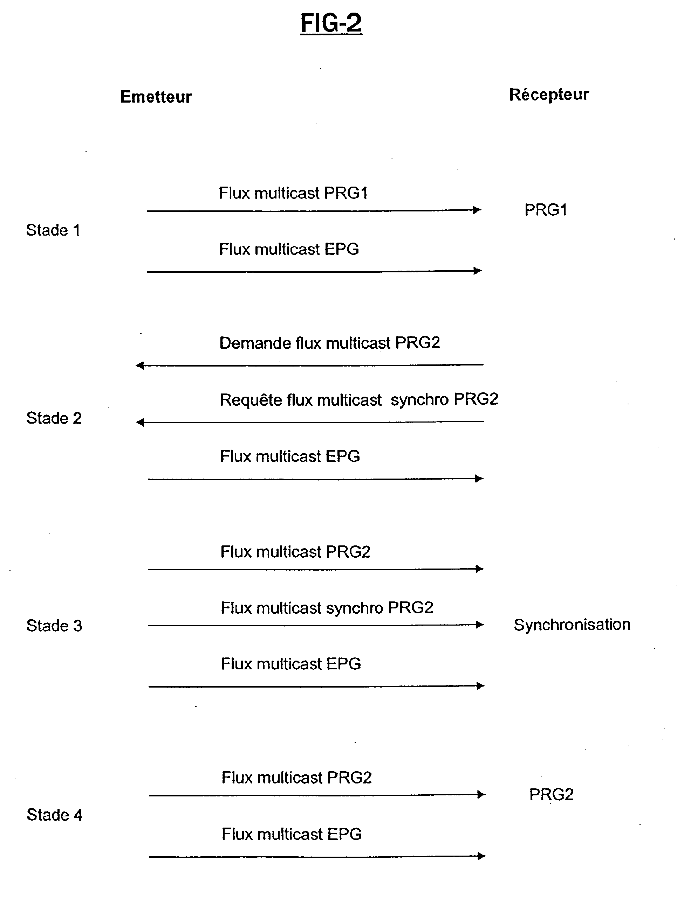

Afin d'éviter un délai d'attente trop long entre la demande de commutation et le moment où elle est effectivement réalisée (comme cela a été expliqué plus haut à propos du standard de codage MPEG-4), l'invention propose le procédé de commutation représenté schématiquement sur la figure 2.

Dans cet exemple, le flux multicast EPG contient non seulement les informations sur les adresses multicast des programmes de télévision mais aussi les adresses multicast de flux de synchronisation de ces mêmes programmes. Ce flux est reçu en permanence par le récepteur.

Ces flux de synchronisation sont spécifiques à l'invention et permettent d'obtenir le résultat recherché, qui consiste à réduire le temps de synchronisation à des valeurs acceptables pour le téléspectateur, par exemple 0,5 seconde au lieu de la dizaine qui serait normalement nécessaire avec le type de codage utilisé.

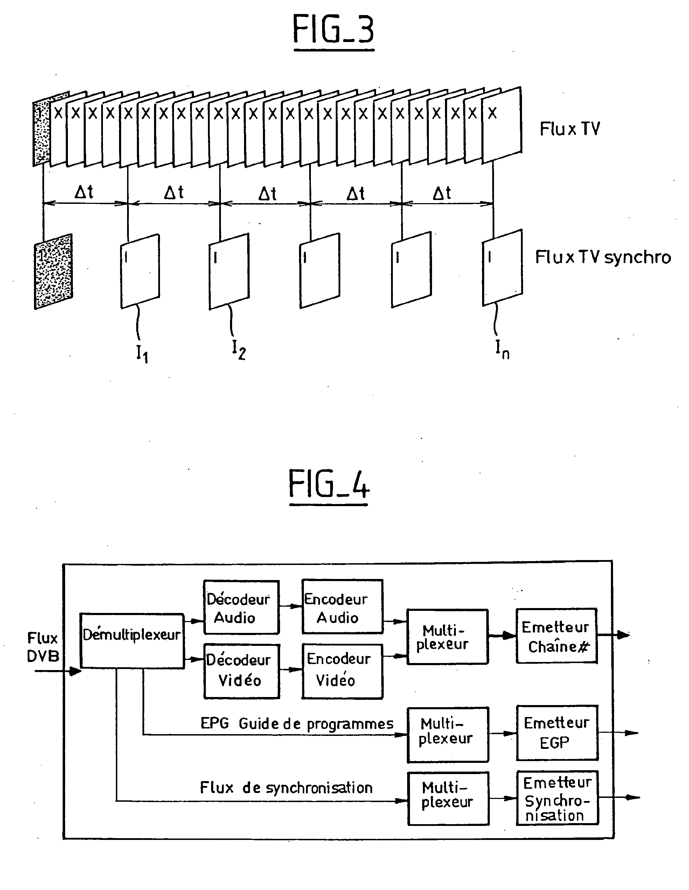

La structure du flux de synchronisation selon l'invention est représentée sur la figure 3. Cette figure met en parallèle le flux multicast d'origine du programme dont on a demandé la commutation, noté « Flux TV », et le flux multicast de synchronisation associé, noté « Flux TV synchro ».

Le flux de synchronisation est généré au niveau de l'émetteur. Il est constitué par un train d'images ne contenant que des images Intra I du flux d'origine, à savoir une première image I de référence suivie d'une pluralité de n images Iₙ encodées I et distantes de la première image I d'un intervalle de temps n.Δt (n=1,2,...).

Chaque image Intra I est encapsulée dans les protocoles de couches PES et TS d'origine du flux, elle est donc accompagnée des informations-système temporelles identifiant uniquement sa position dans le flux.

Les nouvelles images I du flux TV synchro sont diffusées sur une adresse multicast connue, toutes les Δt secondes, ce qui génère un trafic parallèle plus ou moins élevé et une attente plus ou moins grande au niveau du récepteur.

Revenant maintenant à la figure 2, le *stade 1* est le stade initial où le récepteur reçoit le flux multicast contenant le programme de télévision courant PRG1.

Au *stade* 2, une commutation de programmes est effectuée, déclenchant une demande de réception du flux multicast du nouveau programme PRG2, accompagnée d'une requête visant à recevoir le flux multicast de synchronisation (Flux TV synchro) du nouveau programme PRG2.

Au *stade* 3, la commutation des programmes est réalisée. Le récepteur cesse de recevoir le programme courant PRG1 et reçoit les flux multicast du nouveau programme PRG2 et de synchronisation. La synchronisation est effectuée conformément au procédé selon l'invention, comme décrit plus haut en référence à la figure 3.

Au *stade 4,* le nouveau programme PRG2 est le programme courant. Le récepteur cesse de recevoir le flux de synchronisation et se trouve dans l'état initial du stade 1 mais sur un autre programme de télévision PRG2.

En résumé, la resynchronisation des images de deux flux multicast TV et

TV synchro s'effectue de la manière suivante.

Lorsqu'une commutation de programmes est désirée, le récepteur, ou décodeur, se désabonne du flux courant (PRG1) et s'abonne au nouveau flux TV synchro associé au nouveau programme (PRG2). Il reçoit alors une image I (Intra) du train d'images de synchronisation illustré sur la figure 3, la décode, stocke son information temporelle de présentation (PTS), se désabonne du flux TV synchro.

Ensuite, le récepteur s'abonne au nouveau flux TV (PRG2), compare les informations temporelles de chaque image reçue, élimine toutes les images antérieures ou égales en PTS à l'image I de référence décodée, et commence à décoder les images reçues à partir de l'image reçue immédiatement consécutive à l'image de référence. L'image I (Intra) de référence décodée fournit toutes les informations de macroblocs de référence permettant de reconstruire les images consécutives. Dans le cas où la première image reçue par le récepteur est une image de type B, l'image I du flux TV synchro est utilisée comme double référence de l'image B.

La figure 4 est un schéma d'un émetteur apte à mettre en oeuvre le procédé de commutation de programmes qui vient d'être décrit en regard des figures 2 et 3.

L'émetteur reçoit le flux de télévision numérique du programme courant, par exemple au format DVB MPEG-2. Ce flux peut être décodé, puis réencodé selon le standard MPEG-4, et enfin diffusé sur le réseau de diffusion.

De même, l'émetteur fournit le flux EPG ainsi que le flux de synchronisation associé au flux de télévision numérique entrant et dont la structure est montrée sur la figure 3.

Quant au récepteur, appelé plus communément décodeur ou « set-top box », situé chez l'usager, il a pour fonction la réception du signal de télévision numérique, son décodage et l'affichage sur un écran, tel que celui d'un téléviseur. Le récepteur est connecté, d'une part, au réseau de diffusion (réseau Ethernet ou réseau ADSL par exemple) et, d'autre part, au téléviseur. Le récepteur reçoit des paquets au protocole UDP/IP, démultiplexe les flux audio et vidéo, les décode et régénère les signaux analogiques audio et vidéo à destination du téléviseur. Le récepteur est habituellement commandé à distance par une télécommande.

## Revendications

1. Procédé de commutation de programmes vidéo numériques, chaque programme étant diffusé par un émetteur sous forme d'une succession de groupes (GOP) d'images codées comprenant, chacun, une image de référence de type I suivie d'une pluralité d'images secondaires de type X (P ou B),
**caractérisé en ce que**, suite à une requête adressée à l'émetteur par un récepteur desdits programmes lors d'une commutation de programme, ledit procédé comporte une étape consistant pour l'émetteur à substituer au programme d'origine diffusé un flux de synchronisation associé au programme demandé, constitué par un train d'images de référence de type I encodées à partir d'images de référence de type I et P du programme d'origine et séparées par un intervalle de temps n.Δt avec n = 1,2,...

2. Procédé selon la revendication 1, **caractérisé en ce que** lesdits groupes d'images sont codés selon la norme MPEG.

3. Procédé selon l'une des revendications 1 ou 2, **caractérisé en ce que**, lesdits programmes étant diffusés sur le réseau Internet, l'émetteur fournit en permanence au récepteur une adresse IP pour chaque flux de synchronisation associé à chaque programme.

4. Procédé selon la revendication 3, **caractérisé en ce que** la communication avec ladite adresse IP est établie selon un protocole de transport UDP.

5. Procédé selon la revendication 4, **caractérisé en ce que** ledit protocole de transport est le protocole UDP multidiffusion.

6. Procédé selon la revendication 4, **caractérisé en ce que** ladite adresse IP est diffusée par un flux multidiffusion EPG.

7. Émetteur de programmes vidéo numériques, chaque programme étant diffusé sous forme d'une succession de groupes (GOP) d'images codées comprenant, chacun, une image (I) de référence suivie d'une pluralité d'images secondaire (P, B), **caractérisé en ce qu'**il comprend des moyens aptes, sur réception d'une requête de commutation de programme adressée à l'émetteur par un récepteur desdits programmes, à substituer au programme d'origine diffusé un flux de synchronisation associé au programme demandé à la suite d'une commutation de programmes, ledit flux de synchronisation étant constitué par un train d'images comprenant une image (I) de référence suivie d'une pluralité de n images (Iₙ) encodées selon l'image (I) de référence et séparées de l'image (I) de référence par un intervalle de temps n.Δt avec n=1,2,...

8. Émetteur selon la revendication 7, **caractérisé en ce que** lesdits groupes d'images sont codés selon la norme MPEG, l'image de référence étant de type I et les images secondaires étant de type X (P ou B).
